# DEMANDE DE BREVET EUROPEEN

(11) **EP 2 950 255 A1**
(43) Date de publication de la demande: **02.12.2015**
(21) Numéro de dépôt: 15169487.4
(22) Date de dépôt: 27.05.2015
(51) Int. Cl.: G06Q 20/22, G06Q 20/38, G06Q 20/40

(54) **PROCÉDÉ DE DÉLÉGATION D'UNE MISE EN OEUVRE DE TRANSACTIONS, DISPOSITIFS ET PROGRAMMES CORRESPONDANTS**

(30) Priorité: 28.05.2014 FR 1454880
(71) Demandeur: Ingenico Group, 75015 Paris (FR)
(72) Inventeur: Quentin, Pierre, 95880 Enghien Les Bains (FR)
(74) Mandataire: Vidon Brevets & Stratégie

(57) **Abrégé**

L'invention se rapporte à un procédé de délégation, auprès d'un serveur intermédiaire, d'une mise en oeuvre de transactions. Ce procédé comprend :
- au moins une première phase d'inscription d'au moins un serveur de paiement auprès du serveur intermédiaire, cette première phase délivrant, au sein du serveur intermédiaire, une structure de données de délégation comprenant au moins une association entre ledit serveur de paiement et au moins une liste de types de transactions délégués par ledit serveur de paiement audit serveur intermédiaire ; et
- au moins une deuxième phase d'inscription d'au moins un utilisateur auprès du serveur intermédiaire, cette deuxième phase délivrant, au sein du serveur intermédiaire, une structure de données de provisionnement comprenant au moins une association entre un identifiant d'utilisateur, un identifiant de serveur de paiement et un identifiant d'utilisateur auprès dudit serveur de paiement.

## Description

### 1. Domaine de l'invention

L'invention se rapporte au domaine des transactions, notamment financières, réalisées par un utilisateur par le biais d'un terminal de communication. Elle vise plus particulièrement à simplifier l'utilisation d'un service tiers pour la mise en oeuvre de ces transactions.

### 2. Art antérieur

Le développement important des réseaux de communication et la mise sur le marché de terminaux mobiles connectés de plus en plus performants à des coûts de plus en plus abordables font que le grand public dispose maintenant d'un accès quasiment permanent à Internet. Que ce soit par le biais de réseaux wifi ou via les réseaux de téléphonie mobile de dernières générations, à partir d'un téléphone intelligent (smartphone), d'une tablette, ou d'un ordinateur portable, tout un chacun peut accéder à des informations personnelles ou générales en tout lieu et à toute heure.

Ces évolutions ont permis l'émergence de nouveaux services permettant à un utilisateur de réaliser des transactions notamment financières, telles que des opérations de paiement d'un achat ou le transfert de fonds entre comptes, directement depuis son terminal mobile. On peut citer à titre d'exemple des services tels que Paypal™ ou Flashiz™ dans le domaine du paiement en ligne, ou encore les services développés par les institutions bancaires à destination de leurs clients. Si un certain nombre de fonctionnalités offertes par ces services peuvent être communes, chacun d'entre eux a néanmoins ses spécificités. Ainsi, un service tel que Flashiz™ permet de régler rapidement et simplement un achat en flashant un code à barres de type QR-code avec un dispositif mobile. Le succès de Paypal™, service pionnier dans ce domaine et permettant d'effectuer un achat sans avoir à saisir ses coordonnées bancaires, fait qu'il se positionne comme moyen de paiement généralement reconnu et proposé ou accepté par les utilisateurs de services de petites annonces en ligne. Enfin, les institutions bancaires offrent en leur qualité de détenteur du ou des comptes de leur client des fonctionnalités spécifiques telles que l'émission de Relevés d'Identité Bancaire (RIB) ou le transfert d'argent d'un compte courant vers un compte d'épargne par exemple.

Chaque service ayant ses spécificités propres, un utilisateur peut souscrire à plusieurs d'entre eux pour répondre à une multitude de besoins. Par exemple, un utilisateur aura classiquement installé sur son terminal mobile l'application propre à son institution bancaire pour gérer ses comptes, ainsi qu'une application lui permettant de régler un achat en scannant simplement le code à barre d'un produit, et enfin une application de type Paypal™ lui offrant un moyen simple de régler des achats effectués sur un site de petites annonces entre particuliers.

Afin de pouvoir réaliser les transactions pour lesquelles elles ont été conçues, toutes ces applications nécessitent d'être rattachées à un compte bancaire de l'utilisateur, ce qui peut-être effectué par exemple par la fourniture par l'utilisateur de données associées à une carte bancaire à un prestataire de services de paiement.

Il va de soit que sécuriser l'accès à ces services est essentiel : un utilisateur qui a égaré ou s'est fait subtiliser son dispositif mobile (son téléphone portable par exemple) doit avoir la garantie qu'une personne malveillante qui a récupéré son bien ne puisse pas accéder à ses informations bancaires ou à des services permettant de réaliser des transactions financières en son nom.

Aussi l'utilisation de ces services requiert au préalable une étape d'authentification de l'utilisateur. Bien que d'autres moyens existent et tendent à se développer (moyens d'identification biométriques), cette étape est le plus souvent mise en oeuvre par le biais d'une demande de saisie par l'utilisateur d'un identifiant et d'un mot de passe normalement connus de lui seul. Cet identifiant et ce mot de passe ont été préalablement définis, lors de la souscription au service par l'utilisateur.

Chaque service étant libre de fixer ses propres règles quant au format de l'identifiant et du mot de passe, il est très probable qu'un utilisateur ayant souscrit à plusieurs services de ce type se retrouve avec plusieurs identifiants et/ou mots de passe associés à mémoriser. Aussi, mémoriser des informations de connexion qui varient d'un service à un autre peut rapidement s'avérer fastidieux pour l'utilisateur.

Pour répondre à cette problématique, il existe des services jouant le rôle d'intermédiaire et qui, par le biais d'une application installée sur le terminal de communication de l'utilisateur, permettent de fédérer au sein d'une même interface les informations issues de différents services tiers auxquels l'utilisateur a souscrit. Ainsi, par ce point d'entrée unique, l'utilisateur peut accéder aux données de multiples services qu'il a préalablement inscrits via l'application, sans avoir à saisir à chaque utilisation les identifiants et mots de passe propres à chaque service tiers ainsi rattaché.

Cette approche présente néanmoins des inconvénients pour l'utilisateur. Les informations sensibles de connexion aux différents services détenteurs de ses données sont en effet dévoilées à un service intermédiaire, avec tous les risques que cela engendre. On peut citer à titre d'exemple le risque de piratage de l'infrastructure du service intermédiaire, permettant à des personnes malveillantes de récupérer une multitude d'informations de connexion de l'utilisateur, ou encore le risque d'abus de confiance de la part du service intermédiaire qui se voit octroyer un accès total aux données, sans moyen d'en limiter la portée.

La mise en oeuvre du protocole oAuth entre le service intermédiaire et le service détenteur des données de l'utilisateur est un moyen de s'affranchir des inconvénients précités. Il permet en effet au service intermédiaire d'obtenir l'autorisation d'accéder aux données de l'utilisateur sans que les informations de connexion au service tiers détenteur de ces données ne lui soient communiquées. Néanmoins, un des points faibles régulièrement mis en avant avec ce protocole est qu'il favorise précisément le type d'interaction mis en oeuvre par des personnes malveillantes lors de tentatives d'hameçonnage (ou phishing en anglais), à savoir une redirection de l'utilisateur vers une interface tierce de saisie de ses informations de connexion à un service.

Il existe donc un besoin d'un procédé permettant à un serveur intermédiaire de réaliser des transactions pour le compte d'un serveur de paiement, et qui ne présente pas au moins certains des inconvénients exposés précédemment.

### 3. Résumé de l'invention

L'invention ne présente pas au moins certains de ces problèmes de l'art antérieur. En effet, il est proposé un procédé de délégation, auprès d'un serveur intermédiaire, d'une mise en oeuvre de transactions. Selon l'invention, ce procédé comprend :
- au moins une première phase d'inscription d'au moins un serveur de paiement auprès dudit serveur intermédiaire, ladite première phase délivrant, au sein dudit serveur intermédiaire, une structure de données de délégation comprenant au moins une association entre ledit serveur de paiement et au moins une liste de types de transactions délégués par ledit serveur de paiement audit serveur intermédiaire ; et
- au moins une deuxième phase d'inscription d'au moins un utilisateur auprès dudit serveur intermédiaire, ladite deuxième phase délivrant, au sein dudit serveur intermédiaire, une structure de données de provisionnement comprenant au moins une association entre un identifiant d'utilisateur, un identifiant de serveur de paiement et un identifiant d'utilisateur auprès dudit serveur de paiement.

Ainsi, le serveur intermédiaire est à même d'associer en son sein des serveurs de paiements, des types de transaction délégués, et des utilisateurs identifiés auprès des différents serveurs de paiement.

Selon un mode de réalisation particulier, ladite première phase du procédé comprend :
- une étape de transmission audit serveur de paiement d'une requête de délégation de types de transactions, ladite requête comprenant une liste de types de transactions délégables, que le serveur intermédiaire souhaite mettre en oeuvre pour le compte dudit serveur de paiement ;
- une étape de réception d'une donnée représentative d'une décision de souscription du serveur de paiement à au moins un type de transaction de la liste de types de transactions délégables, dite liste de types de transactions délégués ;
- une étape d'enregistrement, au sein de ladite structure de données de délégation, d'une association entre ladite liste de types de transactions délégués et le serveur de paiement.

Ainsi, le serveur intermédiaire peut exécuter ou mettre en oeuvre des transactions pour le compte d'un serveur de paiement. Ces transactions sont listées dans la liste des types de transactions délégués qui est transmise par le serveur de paiement. Ce dernier conserve donc son pouvoir discrétionnaire d'attribution de délégations en fonction des serveurs intermédiaires avec lesquels il traite. Le serveur de paiement dispose ainsi, de manière complémentaire, d'un moyen d'alléger sa charge de traitement de données, puisqu'il peut en quelque sorte s'appuyer sur des serveurs de proximité pour la réalisation de certains types de transactions.

Selon un mode de réalisation particulier, ladite première phase du procédé comprend en outre :
- une étape de réception d'une liste de types de transactions mises en oeuvre par le serveur de paiement, dite liste de types de transactions non délégués.
- une étape d'enregistrement, au sein de la structure de données de délégation, d'une association entre ladite liste de types de transactions non délégués et le serveur de paiement.

Ainsi, le serveur intermédiaire peut différencier les transactions qu'il ne peut opérer de lui-même. Ainsi, le serveur intermédiaire peut différencier les transactions qu'il peut mettre en oeuvre lui-même de celles qu'il ne peut mettre en oeuvre lui-même et qu'il doit donc relayer au serveur de paiement. Le serveur de paiement a donc la possibilité d'accepter ou de refuser de déléguer la réalisation de certains types de transactions au serveur intermédiaire.

Selon un mode de réalisation particulier, ladite deuxième phase du procédé comprend :
- une étape de réception d'une requête d'inscription d'un utilisateur, en provenance d'un terminal de communication, ladite requête comprenant au moins un identifiant dudit utilisateur, au moins un identifiant d'un serveur de paiement et au moins un identifiant dudit utilisateur auprès dudit serveur de paiement ;
- une étape de transmission audit serveur de paiement dudit identifiant d'utilisateur auprès dudit serveur de paiement ;
- une étape de réception d'une donnée représentative d'une décision d'inscription dudit utilisateur ; et
- lorsque ladite donnée représentative d'une décision d'inscription de l'utilisateur est positive, une étape d'enregistrement, au sein de ladite structure de données de provisionnement, d'une association entre ledit identifiant d'utilisateur, ledit identifiant de serveur de paiement et ledit identifiant d'utilisateur auprès dudit serveur de paiement.

Ainsi, des utilisateurs et des fournisseurs de services de paiement sont inscrits au sein d'un seul et même serveur intermédiaire apte à mettre en oeuvre une liste de transactions prédéterminées. Dès lors, du point de vue de l'utilisateur, l'exécution de transactions est simplifiée.

Selon un mode de réalisation particulier, ladite deuxième phase du procédé comprend en outre :
- une étape de transmission audit terminal de communication d'une requête de délégation de types de transactions, ladite requête comprenant une liste de types de transactions délégables, que le serveur intermédiaire souhaite mettre en oeuvre ;
- une étape de réception, en provenance dudit terminal de communication, d'une donnée représentative d'une décision de souscription dudit utilisateur à au moins un type de transaction de la liste de types de transactions délégables, dite liste de types de transactions délégués ;
- une étape d'enregistrement, au sein de la structure de données de délégation, d'une association entre ladite liste de types de transactions délégués et ledit utilisateur.

Ainsi, l'utilisateur reste maître d'accepter ou non la délégation d'un type de transaction au serveur intermédiaire, y compris pour les types de transactions délégués par un serveur de paiement au serveur intermédiaire.

Dans un autre mode de réalisation, l'invention se rapporte également à un procédé de traitement, par un serveur intermédiaire, d'une transaction émanant d'un terminal de communication d'un utilisateur. Selon l'invention, un tel procédé de traitement comprend :
- une étape de réception d'une requête d'exécution de transaction ;
- une étape d'obtention, à partir de ladite requête, d'au moins un identifiant dudit utilisateur, d'au moins un identifiant d'un serveur de paiement, et d'au moins un type de ladite transaction ;
- une étape de recherche, au sein d'une structure de données de provisionnement, d'un identifiant dudit utilisateur auprès du serveur de paiement ;
- une étape de recherche, au sein d'une structure de données de délégation, d'une donnée de délégation associée audit type de ladite transaction, délivrant une décision de délégation ;
- lorsque ladite décision de délégation est positive, une étape de mise en oeuvre par ledit serveur intermédiaire de ladite transaction ;
- lorsque ladite décision de délégation est négative, une étape de transmission audit serveur de paiement dudit type de transaction et dudit identifiant de l'utilisateur auprès du serveur de paiement.

Ainsi, il est possible de réaliser une transaction directement depuis un serveur intermédiaire.

Selon un mode de réalisation particulier, ledit procédé de traitement est caractérisé en ce que, lorsque ladite décision de délégation est positive, ladite étape de mise en oeuvre de ladite transaction comprend :
- une étape d'établissement, auprès du serveur de paiement, d'une liaison sécurisée de transmission de données ;
- une étape de transmission, au serveur de paiement, d'une requête d'obtention d'une donnée bancaire, ladite requête comprenant ledit identifiant dudit utilisateur auprès du serveur de paiement ;
- une étape de réception de ladite donnée bancaire associée audit utilisateur ;
- une étape d'exécution de ladite transaction à l'aide de ladite donnée bancaire.

Ainsi, le serveur intermédiaire, de par sa liaison sécurisée avec le serveur de paiement, est à même d'obtenir des informations complémentaires nécessaires à la mise en oeuvre de la transaction. Ces informations ne sont pas sauvegardées par le serveur intermédiaire. Ainsi, quand bien même le serveur intermédiaire serait compromis, le vol des données présentes sur ce serveur intermédiaire ne permettrait pas la réalisation de transactions.

Selon une caractéristique particulière, ledit procédé de traitement comprend en outre, lorsque ladite décision de délégation est négative, une étape de réception, en provenance du serveur de paiement, d'un statut de mise en oeuvre de ladite transaction.

Ainsi, le serveur intermédiaire connaît le statut d'une transaction effectuée par le serveur de paiement. Il est notamment prévenu de la fin d'une transaction.

Selon une autre caractéristique particulière, ledit procédé de traitement comprend en outre une étape de transmission d'un statut de mise en oeuvre de ladite transaction audit terminal de communication de l'utilisateur.

Ainsi, le serveur intermédiaire est à même d'avertir l'utilisateur du statut d'une transaction, notamment de sa bonne exécution.

Selon un mode de réalisation particulier, le canal de communication entre le serveur intermédiaire et le serveur de paiement est sécurisé.

Selon un mode de réalisation particulier, le canal de communication entre le serveur intermédiaire et le terminal de communication est sécurisé.

Ainsi, l'ensemble de la chaîne de communication est sécurisé. Ainsi, le serveur intermédiaire, de par sa liaison sécurisée avec le terminal de communication, est à même d'obtenir des informations nécessaires à la mise en oeuvre de la transaction. Seul cet identifiant est sauvegardé par le serveur intermédiaire. Ainsi, quand bien même le serveur intermédiaire serait compromis, le vol des données présentes sur ce serveur intermédiaire ne permettrait pas la réalisation de transactions.

Dans un autre mode de réalisation, l'invention se rapporte également à un serveur intermédiaire pour la délégation de la mise en oeuvre de transactions, selon le procédé de délégation exposé précédemment. Selon l'invention, un tel serveur intermédiaire comprend :
- des moyens d'inscription d'au moins un serveur de paiement auprès dudit serveur intermédiaire, lesdits moyens délivrant, au sein dudit serveur intermédiaire, une structure de données de délégation comprenant au moins une association entre ledit serveur de paiement et au moins une liste de types de transactions délégués par ledit serveur de paiement audit serveur intermédiaire ; et
- des moyens d'inscription d'au moins un utilisateur auprès dudit serveur intermédiaire, lesdits moyens délivrant, au sein dudit serveur intermédiaire, une structure de données de provisionnement comprenant au moins une association entre un identifiant d'utilisateur, un identifiant de serveur de paiement et un identifiant d'utilisateur auprès dudit serveur de paiement.

Selon une implémentation préférée, les différentes étapes des procédés selon l'invention sont mises en oeuvre par un ou plusieurs logiciels ou programmes d'ordinateur, comprenant des instructions logicielles destinées à être exécutées par un processeur de données d'un module relais selon l'invention et étant conçu pour commander l'exécution des différentes étapes des procédés.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en oeuvre ses propres modules logiciels.

Les différents modes de réalisation mentionnés ci-dessus sont combinables entre eux pour la mise en oeuvre de l'invention.

### 4. Liste des figures

D'autres caractéristiques et avantages de l'invention apparaîtront plus clairement à la lecture de la description suivante de plusieurs modes de réalisation, donnés à titre de simples exemples illustratifs et non limitatifs, et des dessins annexés, parmi lesquels:
- la figure 1 décrit un mode de réalisation présentant la phase d'inscription d'un serveur de paiement auprès d'un serveur intermédiaire ;
- la figure 2 décrit un mode de réalisation complémentaire présentant la phase d'inscription d'un utilisateur auprès d'un serveur intermédiaire ;
- la figure 3 illustre une mise en oeuvre des étapes de traitement d'une transaction.
- la figure 4 illustre un dispositif de délégation de la mise en oeuvre de transactions selon la technique proposée.
- la figure 5 illustre un dispositif de traitement de transactions déléguées selon la technique proposée.

### 5. Description d'un mode de réalisation de l'invention

### 5.1 Principe général

Comme exposé préalablement, il a été constaté que les solutions actuelles permettant à un service intermédiaire de réaliser des transactions pour le compte d'un service de paiement sont susceptibles d'exposer un utilisateur à certains risques : piratage de données au niveau du service intermédiaire, niveau de privilèges accordé au service intermédiaire trop important, risque d'hameçonnage accru. L'utilisation d'un service intermédiaire pour fédérer des services de paiement a pourtant un intérêt pour l'utilisateur, dans la mesure où cette solution lui permet de s'affranchir d'avoir à mémoriser et saisir à répétition une multitude d'informations de connexion. L'objet du procédé proposé est donc de permettre à un utilisateur d'associer un service de paiement auquel il a préalablement souscrit à un service intermédiaire, de sorte que ce dernier puisse effectuer des transactions pour le compte du premier, sans présenter au moins certains des inconvénients exposés ci-dessus, et sans changer les habitudes d'un utilisateur habitué à utiliser ce type de service. Il s'agit donc d'un procédé de délégation, auprès d'un serveur intermédiaire, de la mise en oeuvre de transactions. Cette délégation n'est pas systématique : pour diverses raisons - par exemple des transactions complexes, des transactions faisant intervenir des montants importants, ou toute autre raison - le serveur de paiement doit pouvoir garder la maîtrise de certains types de transactions.

Le principe général de l'invention, repose sur la mise en oeuvre de deux phases d'inscription, en relation avec un serveur intermédiaire : une première phase d'inscription d'au moins un serveur de paiement auprès du serveur intermédiaire, et une deuxième phase d'inscription d'au moins un utilisateur auprès du serveur intermédiaire.

La phase d'inscription d'au moins un serveur de paiement auprès du serveur intermédiaire permet la constitution, au sein du serveur intermédiaire, d'une structure de données dite de délégation, comprenant au moins une association entre ledit serveur de paiement (SrvP) et au moins une liste de types de transactions délégués (LTDe) par ledit serveur de paiement (SrvP) audit serveur intermédiaire (Srvlnt). Ainsi le serveur intermédiaire sait, au regard d'un serveur de paiement donné, les types de transaction qui lui sont délégués par ce serveur de paiement.

La phase d'inscription d'au moins un utilisateur auprès du serveur intermédiaire permet quant à elle la constitution, au sein du serveur intermédiaire, d'une structure de données dite de provisionnement comprenant au moins une association entre un identifiant d'utilisateur (id), un identifiant de serveur de paiement (idSrvP) et un identifiant d'utilisateur (idP) auprès dudit serveur de paiement (SrvP). Ainsi le serveur intermédiaire connaît les serveurs de paiement associés à un utilisateur donné, et les identifiants de cet utilisateur auprès de ces serveurs de paiement.

On présente par la suite une mise en oeuvre du principe exposé précédemment. Cette mise en oeuvre n'est nullement limitative, et toute autre mise en oeuvre comprenant les mêmes caractéristiques que celles qui sont exposées est envisageable.

### 5.2 Description d'un mode de réalisation

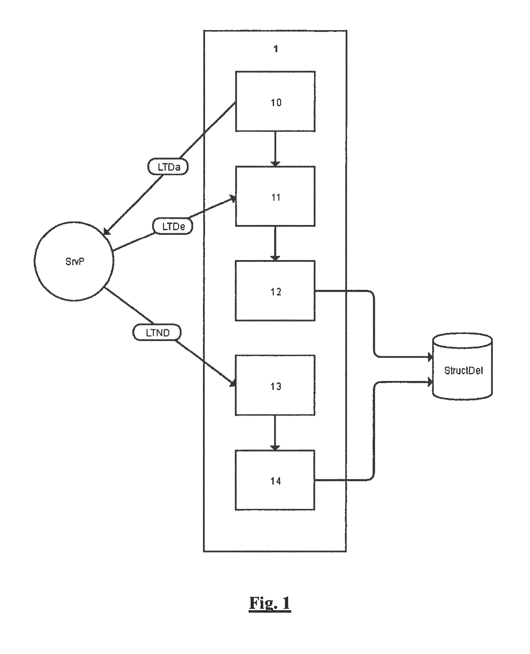

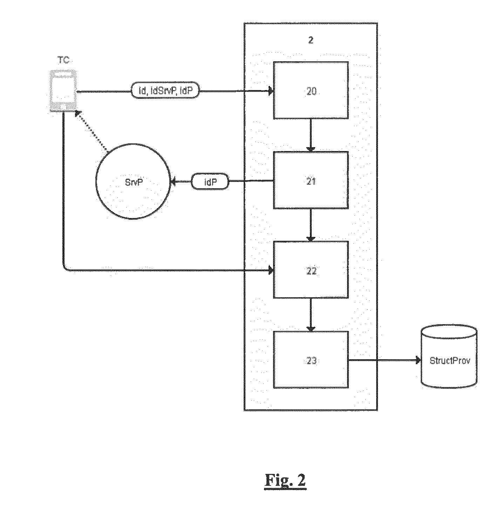

Dans ce mode de réalisation présenté en relation avec les figures 1 et 2, on réalise dans une première phase (1) l'inscription d'un serveur de paiement auprès d'un serveur intermédiaire, puis dans une deuxième phase (2) l'inscription d'un utilisateur auprès du serveur intermédiaire, conformément au principe général de l'invention décrit précédemment.

Dans ce mode de réalisation, la première phase (1) du procédé de délégation mis en oeuvre comprend, en relation avec la figure 1 :
- une étape de transmission (10) à un serveur de paiement (SrvP) d'une requête de délégation de types de transactions, ladite requête comprenant une liste de types de transactions délégables (LTDa), que le serveur intermédiaire (Srvlnt) souhaite mettre en oeuvre pour le compte dudit serveur de paiement (SrvP) ;
- une étape de réception (11) d'une donnée représentative d'une décision de souscription du serveur de paiement (SrvP) à au moins un type de transaction de la liste de types de transactions délégables (LTDa), dite liste de types de transactions délégués (LTDe) ;
- une étape d'enregistrement (12), au sein de ladite structure de données de délégation (StructDel), d'une association entre ladite liste de types de transactions délégués (LTDe) et le serveur de paiement (SrvP).

Dans le mode de réalisation particulier exposé en figure 1, cette première phase (1) comprend en outre :
- une étape de réception (13) d'une liste de types de transactions mises en oeuvre par le serveur de paiement (SrvP), dite liste de types de transactions non délégués (LTND).
- une étape d'enregistrement (14), au sein de la structure de données de délégation (StructDel), d'une association entre ladite liste de types de transactions non délégués (LTND) et le serveur de paiement (SrvP).

Dans d'autres modes de réalisation, cette première phase (1) peut ne comprendre que l'une ou l'autre des séquences d'étapes (10) à (12) d'une part, ou (13) à (14) d'autre part.

Cette première phase (1) d'inscription d'un serveur de paiement auprès d'un serveur intermédiaire permet d'établir une relation de confiance entre ces deux serveurs, et de fixer le périmètre d'action de chacun d'eux, ce périmètre étant défini par les associations enregistrées dans la structure de données de délégation. Le serveur intermédiaire soumet donc au serveur de paiement une liste de types de transactions dits délégables, qu'il se propose d'effectuer lui-même pour le compte du serveur de paiement. Le serveur de paiement indique quant à lui au serveur intermédiaire les types de transactions qui doivent rester dans son périmètre, et qu'il ne souhaite pas déléguer. Ainsi, à l'issue de cette première phase et avant toute intervention de l'utilisateur du service intermédiaire, le serveur intermédiaire et le serveur de paiement sont identifiés l'un auprès de l'autre, et le serveur intermédiaire sait différencier les types de transactions qu'il peut effectuer de lui-même, de ceux qu'il doit relayer au serveur de paiement. Par le biais de ce mécanisme, le serveur intermédiaire peut ainsi exécuter ou mettre en oeuvre des transactions pour le compte d'un serveur de paiement. La délégation ou non de types de transactions reste du ressort du serveur de paiement, qui conserve donc son pouvoir discrétionnaire d'attribution de délégations en fonction des serveurs intermédiaires avec lesquels il traite. Le serveur de paiement dispose ainsi, de manière complémentaire, d'un moyen d'alléger sa charge de traitement de données, puisqu'il peut en quelque sorte s'appuyer sur des serveurs de proximité pour la réalisation de certains types de transactions. Les types de transactions délégués peuvent par exemple concerner des types de transactions jugés peu complexes, ou encore faisant intervenir - dans le cas de transactions financières - des montants assez faibles (par exemple inférieure à une somme inscrite en paramètre de la délégation). Au contraire, les types de transactions non délégués, pour lesquels le serveur de paiement souhaite conserver la maîtrise de l'exécution, peuvent concerner des opérations plus complexes ou à caractère plus sensible pour un utilisateur, par exemple des transactions financières faisant intervenir des montants importants. Ces exemples sont bien entendu donnés à titre purement illustratif et sont donc non limitatifs.

A cette première phase (1) d'inscription d'un serveur de paiement auprès du serveur intermédiaire vient s'ajouter une deuxième phase (2) d'inscription d'un utilisateur auprès du serveur intermédiaire. Cet utilisateur a préalablement souscrit à des services proposés par ledit serveur de paiement, et dispose donc d'informations de connexion de type identifiant et mot de passe auprès de ce serveur.

Dans cette deuxième phase (2), les étapes suivantes sont mises en oeuvre, en relation avec la figure 2 :
- une étape de réception (20) d'une requête d'inscription d'un utilisateur, en provenance d'un terminal de communication (TC), ladite requête comprenant au moins un identifiant dudit utilisateur (id), au moins un identifiant d'un serveur de paiement (idSrvP) et au moins un identifiant dudit utilisateur (idP) auprès dudit serveur de paiement (SrvP);
- une étape de transmission (21) audit serveur de paiement (SrvP) dudit identifiant d'utilisateur (idP) auprès dudit serveur de paiement (SrvP) ;
- une étape de réception (22) d'une donnée représentative d'une décision d'inscription dudit utilisateur (Usr) ; et
- lorsque ladite donnée représentative d'une décision d'inscription de l'utilisateur est positive, une étape d'enregistrement (23), au sein de ladite structure de données de provisionnement (StructProv), d'une association entre ledit identifiant d'utilisateur (id), ledit identifiant de serveur de paiement (idSrvP) et ledit identifiant d'utilisateur (idP) auprès dudit serveur de paiement (SrvP).

La structure de données de provisionnement ainsi constituée au niveau du serveur intermédiaire lui permet de connaître, pour un utilisateur donné, les services de paiement que cet utilisateur a choisi de fédérer au sein de ce serveur intermédiaire, et pour chacun d'eux son identifiant d'utilisateur auprès de ce service. Cette deuxième phase (2) d'inscription d'un utilisateur auprès du serveur intermédiaire permet par ailleurs d'établir une relation de confiance entre l'utilisateur et le serveur intermédiaire, relation qui est supposée être sécurisée de par l'utilisation de moyens de transmission sécurisés entre le terminal de l'utilisateur et le serveur intermédiaire. Ainsi une fois un serveur de paiement inscrit sur le serveur intermédiaire, un utilisateur disposant d'un compte sur ce serveur de paiement peut alors le rattacher au serveur intermédiaire en réalisant une inscription idoine. Dans un mode de réalisation, l'utilisateur est identifié auprès du serveur intermédiaire, soit par l'utilisation d'un couple identifiant/mot de passe. Dans un mode de réalisation privilégié soit l'utilisateur est identifié par l'utilisation de matériels cryptographiques installés tant sur le terminal de communication de l'utilisateur que sur le serveur intermédiaire, soit par d'autres moyens. Ce mode de réalisation présente plusieurs avantages. En premier lieu, il permet à l'utilisateur de rattacher au serveur intermédiaire le compte qu'il détient auprès du serveur de paiement, en ne fournissant, lors de l'inscription sur le serveur intermédiaire, que son seul identifiant d'utilisateur auprès de ce serveur de paiement. La communication du mot de passe associé n'est plus nécessaire, dans la mesure où une relation de confiance a préalablement été établie entre le serveur intermédiaire et le serveur de paiement. Il en découle une simplification de la saisie par rapport aux solutions de l'art antérieur, pour l'utilisateur souhaitant rattacher un compte de paiement à un service intermédiaire. En second lieu, une intrusion malveillante dans le système du serveur intermédiaire ne compromettra pas les serveurs de paiement rattachés par l'utilisateur, dans la mesure où les mots de passe des comptes associés ne sont pas connus du serveur intermédiaire.

Dans un autre mode de réalisation particulier, l'utilisateur a la possibilité de refuser que le serveur intermédiaire réalise certains types de transactions pour le compte du serveur de paiement, et ce même si le serveur de paiement a préalablement autorisé la délégation desdits types de transactions au serveur intermédiaire lors de la première phase d'inscription. Dans ce cas, la décision de l'utilisateur prime, et les transactions concernées sont réalisées par le serveur de paiement.

Ainsi, par rapport au mode de réalisation précédant, la deuxième phase (2) d'inscription d'un utilisateur auprès du service intermédiaire comprend en outre :
- une étape de transmission audit terminal de communication (TC) d'une requête de délégation de types de transactions, ladite requête comprenant une liste de types de transactions délégables (LTDaUsr), que le serveur intermédiaire (Srvlnt) souhaite mettre en oeuvre ;
- une étape de réception, en provenance dudit terminal de communication (TC), d'une donnée représentative d'une décision de souscription dudit utilisateur (Usr) à au moins un type de transaction de la liste de types de transactions délégables (LTDaUsr), dite liste de types de transactions délégués (LTDeUsr) ;
- une étape d'enregistrement, au sein de la structure de données de délégation (StructDel), d'une association entre ladite liste de types de transactions délégués (LTDeUsr) et ledit utilisateur (Usr).

Dans ce mode de réalisation, la structure de délégation constituée lors de la première phase (1) d'inscription d'un serveur de paiement auprès d'un serveur intermédiaire est donc enrichie par l'ajout d'associations entre un utilisateur et les types de transactions pour lesquels cet utilisateur autorise effectivement la délégation, à savoir la mise en oeuvre d'une transaction par le serveur intermédiaire. Les types de transactions qui peuvent être concernés par ce mécanisme sont uniquement ceux que le serveur de paiement a choisi de déléguer au serveur intermédiaire en première phase. Ainsi, un utilisateur n'a pas la possibilité d'imposer une délégation d'un type de transactions au serveur intermédiaire, si le type de transactions concerné ne fait pas partie de la liste des types de transaction délégués (LTDe) au serveur intermédiaire par le serveur de paiement.

### 5.3 Utilisation et modes de réalisation associés

Une fois réalisées les inscriptions, auprès d'un serveur intermédiaire, d'un serveur de paiement d'une part (conformément à la première phase du procédé de délégation) et d'un utilisateur disposant d'un compte sur ce serveur de paiement d'autre part (conformément à la deuxième phase du procédé de délégation), le mécanisme de délégation peut être exploité pour le traitement d'une transaction. Ainsi, l'utilisateur peut demander l'exécution d'une transaction à partir d'un terminal de communication en sa possession, par le biais dudit serveur intermédiaire. Ce terminal de communication peut par exemple être un téléphone intelligent (smartphone), une tablette, un ordinateur fixe ou portable. Le service associé à ce serveur intermédiaire peut être accessible par exemple au moyen d'une application dédiée, installée sur le terminal de communication de l'utilisateur, ou encore via un site Internet consultable directement depuis un navigateur présent sur le terminal de communication. L'utilisation de ce service peut nécessiter la saisie préalable d'informations de connexion au service - du type couple identifiant/mot de passe ou encore code d'identification personnel (code PIN), ou l'utilisation de tout autre moyen d'authentification, y compris biométriques.

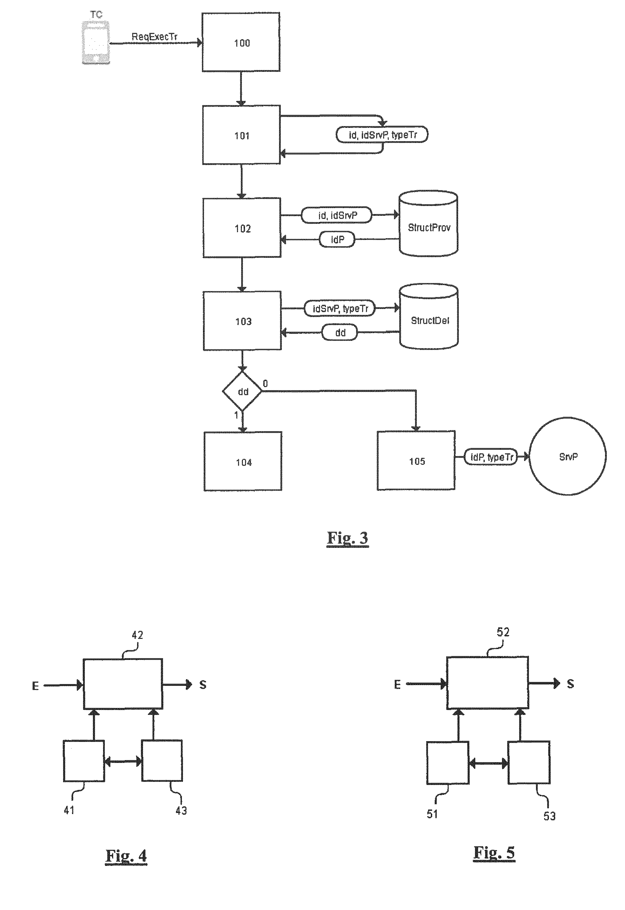

Au niveau du serveur intermédiaire, les étapes mises en oeuvre dans ce procédé de traitement d'une transaction sont les suivantes, en relation avec la figure 3 :
- une étape de réception (100) d'une requête d'exécution de transaction (ReqExecTr) ;
- une étape d'obtention (101), à partir de ladite requête (ReqExecTr), d'au moins un identifiant (Id) dudit utilisateur, d'au moins un identifiant d'un serveur de paiement (idSrvP), et d'au moins un type (typeTr) de ladite transaction ;
- une étape de recherche (102), au sein d'une structure de données de provisionnement (StructProv), d'un identifiant dudit utilisateur (idP) auprès du serveur de paiement (SrvP) ;
- une étape de recherche (103), au sein d'une structure de données de délégation (StructDel), d'une donnée de délégation (dd) associée audit type (typeTr) de ladite transaction, représentative d'une décision de délégation ;
- lorsque ladite donnée de délégation (dd) est positive, une étape de mise en oeuvre (104) de ladite transaction ;
- lorsque ladite donnée de délégation (dd) est négative, une étape de transmission (105) audit serveur de paiement (SrvP) dudit type de transaction (typeTr) et dudit identifiant de l'utilisateur (idP) auprès du serveur de paiement (SrvP).

Les structures de données de délégation (StructDel) et de provisionnement (StructProv) sont celles constituées lors de la mise en oeuvre des deux phases du procédé de délégation exposé précédemment, à savoir les phases d'inscription d'au moins un serveur de paiement et d'au moins un utilisateur auprès d'un serveur intermédiaire.

Dans un mode de réalisation particulier, lorsque la donnée de délégation est positive, l'étape de mise en oeuvre (104) de la transaction par le serveur intermédiaire inclut un dialogue supplémentaire entre ledit serveur intermédiaire et le serveur de paiement, comprenant les étapes suivantes :
- une étape d'établissement, auprès du serveur de paiement (SrvP), d'une liaison sécurisée de transmission de données ;
- une étape de transmission, au serveur de paiement (SrvP), d'une requête d'obtention d'une donnée bancaire, ladite requête comprenant ledit identifiant (IdP) dudit utilisateur auprès du serveur de paiement (SrvP) ;
- une étape de réception de ladite donnée bancaire associée audit utilisateur ;
- une étape d'exécution de ladite transaction à l'aide de ladite donnée bancaire.

Ces étapes supplémentaires permettent au serveur intermédiaire d'obtenir, si le type de transaction à effectuer l'exige, les données complémentaires qui lui permettront de mener à bien l'exécution de la transaction. Ces informations ne sont pas sauvegardées par le serveur intermédiaire. Ainsi, quand bien même le serveur intermédiaire serait compromis, le vol des données présentes sur ce serveur intermédiaire ne permettrait pas la réalisation de transactions.

Dans un autre mode de réalisation particulier, lorsque la donnée de délégation est négative, le procédé de traitement d'une transaction comprend en outre une étape de réception d'un statut de mise en oeuvre de la transaction de type non délégué. Ce statut permet au serveur intermédiaire de connaître l'état actuel d'une transaction exécutée par le serveur de paiement. A titre d'exemples non limitatifs, on peut envisager les états suivants : en cours d'exécution, terminée, abandonnée.

Dans encore un mode de réalisation particulier, et quelque soit la valeur de la donnée de délégation, le procédé de traitement d'une transaction inclut une étape supplémentaire de transmission d'un statut de mise en oeuvre de la transaction au terminal de communication de l'utilisateur. L'objectif est cette fois d'informer l'utilisateur de l'état actuel d'une transaction, qu'elle soit effectuée par le serveur intermédiaire ou par le serveur de paiement. Ici encore, on peut envisager les exemples non limitatifs d'états suivants : en cours d'exécution, terminée, abandonnée.

Dans des modes de réalisations dérivés, et afin de renforcer la sécurité du procédé, les canaux de communication entre le serveur intermédiaire et le terminal de communication d'une part, et entre le serveur intermédiaire et le serveur de paiement d'autre part, sont sécurisés. Ceci peut être mis en oeuvre par l'utilisation de protocoles de chiffrement de données, par exemple SSL ou TLS, qui permettent d'assurer une certaine confidentialité des données transmises. La sécurisation du canal de communication entre le serveur intermédiaire et le serveur de paiement peut aussi par exemple être assurée par la création d'un réseau privé virtuel (ou Virtual Private Network - VPN en anglais) entre ces deux serveurs. Les données transitant d'une extrémité à l'autre du VPN sont chiffrées par le biais d'un protocole de tunnelisation, par exemple SSL ou TLS, et sont donc inaccessibles à toute personne extérieure au VPN.

### 5.4 Dispositifs pour la mise en oeuvre de l'invention

On décrit, en relation avec la figure 4, un serveur intermédiaire (Srvlnt) comprenant des moyens permettant l'exécution du procédé de délégation de transactions décrit préalablement. Ainsi, un tel serveur comprend :
- des moyens d'inscription d'au moins un serveur de paiement (SrvP) auprès dudit serveur intermédiaire (Srvlnt), lesdits moyens délivrant, au sein dudit serveur intermédiaire (Srvlnt), une structure de données de délégation (StructDel) comprenant au moins une association entre ledit serveur de paiement (SrvP) et au moins une liste de types de transactions délégués (LTDe) par ledit serveur de paiement (SrvP) audit serveur intermédiaire ; et
- des moyens d'inscription d'au moins un utilisateur (Usr) auprès dudit serveur intermédiaire (Srvlnt), lesdits moyens délivrant, au sein dudit serveur intermédiaire (Srvlnt), une structure de données de provisionnement (StructProv) comprenant au moins une association entre un identifiant d'utilisateur (id), un identifiant de serveur de paiement (idSrvP) et un identifiant d'utilisateur (idP) auprès dudit serveur de paiement (SrvP).

Par exemple, le serveur intermédiaire comprend une mémoire 41 constituée d'une mémoire tampon, une unité de traitement 42, équipée par exemple d'un microprocesseur, et pilotée par le programme d'ordinateur 43, mettant en oeuvre le procédé de délégation selon l'invention.

À l'initialisation, les instructions de code du programme d'ordinateur 43 sont par exemple chargées dans une mémoire avant d'être exécutées par le processeur de l'unité de traitement 42. L'unité de traitement 42 reçoit en entrée (E) par exemple des données d'identification d'un serveur de paiement et/ou des données d'identification d'un utilisateur et/ou des données représentatives de types de transactions et de délégation associée. Le microprocesseur de l'unité de traitement 42 réalise les étapes du procédé de délégation de mise en oeuvre de transactions, selon les instructions du programme d'ordinateur 43 pour enregistrer des associations entre des serveurs de paiements et des liste de transactions déléguées d'une part, et des associations entre des identifiants d'utilisateurs, des identifiants de serveurs de paiement et des identifiants d'utilisateurs auprès de ces serveurs de paiement d'autre part, et notifier en sortie (S) le succès ou l'échec de ces enregistrements.

Pour cela, le serveur intermédiaire comprend, outre la mémoire tampon 41, des moyens de transmission/réception de données qui peuvent se matérialiser sous la forme d'une interface de connexion à un ou plusieurs réseaux de communication, ces moyens permettant éventuellement d'établir une liaison sécurisée point à point avec un serveur d'un fournisseur de services de paiement. Il peut s'agir d'interfaces logicielles ou d'interfaces matérielles (de type carte réseau ou modules matériels de communication réseau). Selon l'invention, un tel serveur intermédiaire comprend en outre des moyens de stockage qui peuvent prendre la forme d'une base de données ou un accès à de tels moyens de stockage. Ces moyens de stockage comprennent des structures de délégation et de provisionnement.

On décrit par ailleurs, en relation avec la figure 5, un serveur de traitement d'une transaction émanant d'un terminal de communication (TC) d'un utilisateur comprenant des moyens permettant l'exécution du procédé de traitement de transactions décrit préalablement. Ainsi, un tel serveur de traitement comprend :
- des moyens de réception d'une requête d'exécution de transaction (ReqExecTr) ;
- des moyens d'obtention, à partir de ladite requête (ReqExecTr), d'au moins un identifiant dudit utilisateur (id), d'au moins un identifiant d'un serveur de paiement (idSrvP), et d'au moins un type (typeTr) de ladite transaction ;
- des moyens de recherche, au sein d'une structure de données de provisionnement (StructProv), d'un identifiant dudit utilisateur (idP) auprès du serveur de paiement (SrvP) ;
- des moyens de recherche, au sein d'une structure de données de délégation (StructDel), d'une donnée de délégation associée audit type (typeTr) de ladite transaction, délivrant une décision de délégation (dd) ;
- lorsque ladite décision de délégation (dd) est positive, des moyens de mise en oeuvre de ladite transaction ;
- lorsque ladite décision de délégation (dd) est négative, des moyens de transmission audit serveur de paiement (SrvP) dudit type de transaction (typeTr) et dudit identifiant de l'utilisateur (idP) auprès du serveur de paiement (SrvP).

Par exemple, le serveur de traitement d'une transaction comprend une mémoire 51 constituée d'une mémoire tampon, une unité de traitement 52, équipée par exemple d'un microprocesseur, et pilotée par le programme d'ordinateur 53, mettant en oeuvre le procédé de traitement de transactions selon l'invention.

À l'initialisation, les instructions de code du programme d'ordinateur 53 sont par exemple chargées dans une mémoire avant d'être exécutées par le processeur de l'unité de traitement 52. L'unité de traitement 52 reçoit en entrée (E) par exemple des données d'identification d'un serveur de paiement et/ou des données d'identification d'un utilisateur et/ou des données représentatives d'un type de transaction. Le microprocesseur de l'unité de traitement 52 réalise les étapes du procédé de traitement de transactions, selon les instructions du programme d'ordinateur 53 pour mettre en oeuvre la transaction ou la relayer au serveur de paiement selon qu'elle soit de type délégué ou non, et notifier en sortie (S) le succès ou l'échec de cette action de mis en oeuvre ou de transmission au serveur de paiement.

Pour cela, le serveur de traitement de transactions comprend, outre la mémoire tampon 51, des moyens de transmission/réception de données qui peuvent se matérialiser sous la forme d'une interface de connexion à un ou plusieurs réseaux de communication, ces moyens permettant éventuellement d'établir une liaison sécurisée point à point avec un terminal de communication d'un utilisateur et/ou un serveur d'un fournisseur de services de paiement. Il peut s'agir d'interfaces logicielles ou d'interfaces matérielles (de type carte réseau ou modules matériels de communication réseau). Selon l'invention, un tel serveur de traitement comprend en outre des moyens de stockage qui peuvent prendre la forme d'une base de données ou un accès à de tels moyens de stockage. Ces moyens de stockage comprennent des structures de délégation et de provisionnement.

## Revendications

1. Procédé de délégation, auprès d'un serveur intermédiaire (Srvlnt), d'une mise en oeuvre de transactions, procédé **caractérisé en ce qu'**il comprend :
- au moins une première phase (1) d'inscription d'au moins un serveur de paiement (SrvP) auprès dudit serveur intermédiaire (Srvlnt), ladite première phase délivrant, au sein dudit serveur intermédiaire (Srvlnt), une structure de données de délégation (StructDel) comprenant au moins une association entre ledit serveur de paiement (SrvP) et au moins une liste de types de transactions délégués (LTDe) par ledit serveur de paiement (SrvP) audit serveur intermédiaire (Srvlnt),
ladite première phase comprenant :
- une étape de transmission (10) audit serveur de paiement (SrvP) d'une requête de délégation de types de transactions, ladite requête comprenant une liste de types de transactions délégables (LTDa), que le serveur intermédiaire (Srvlnt) souhaite mettre en oeuvre pour le compte dudit serveur de paiement (SrvP) ;
- une étape de réception (11) d'une donnée représentative d'une décision de souscription du serveur de paiement (SrvP) à au moins un type de transaction de la liste de types de transactions délégables (LTDa), dite liste de types de transactions délégués (LTDe) ;
- une étape d'enregistrement (12), au sein de ladite structure de données de délégation (StructDel), d'une association entre ladite liste de types de transactions délégués (LTDe) et le serveur de paiement (SrvP) ;
et
- au moins une deuxième phase (2) d'inscription d'au moins un utilisateur (Usr) auprès dudit serveur intermédiaire (Srvlnt), ladite deuxième phase délivrant, au sein dudit serveur intermédiaire (Srvlnt), une structure de données de provisionnement (StructProv) comprenant au moins une association entre un identifiant d'utilisateur (id), un identifiant de serveur de paiement (idSrvP) et un identifiant d'utilisateur (idP) auprès dudit serveur de paiement (SrvP).

2. Procédé selon la revendication 1, **caractérisé en ce que** ladite première phase (1) comprend :
- une étape de réception (13) d'une liste de types de transactions mises en oeuvre par le serveur de paiement (SrvP), dite liste de types de transactions non délégués (LTND).
- une étape d'enregistrement (14), au sein de la structure de données de délégation (StructDel), d'une association entre ladite liste de types de transactions non délégués (LTND) et le serveur de paiement (SrvP).

3. Procédé de délégation selon l'une quelconque des revendications 1 à 2 **caractérisé en ce que** ladite deuxième phase (2) comprend :
- une étape de réception (20) d'une requête d'inscription d'un utilisateur, en provenance d'un terminal de communication (TC), ladite requête comprenant au moins un identifiant dudit utilisateur (id), au moins un identifiant d'un serveur de paiement (idSrvP) et au moins un identifiant dudit utilisateur (idP) auprès dudit serveur de paiement (SrvP);
- une étape de transmission (21) audit serveur de paiement (SrvP) dudit identifiant d'utilisateur (idP) auprès dudit serveur de paiement (SrvP);
- une étape de réception (22) d'une donnée représentative d'une décision d'inscription dudit utilisateur (Usr) ; et
- lorsque ladite donnée représentative d'une décision d'inscription de l'utilisateur est positive, une étape d'enregistrement (23), au sein de ladite structure de données de provisionnement (StructProv), d'une association entre ledit identifiant d'utilisateur (id), ledit identifiant de serveur de paiement (idSrvP) et ledit identifiant d'utilisateur (idP) auprès dudit serveur de paiement (SrvP).

4. Procédé selon la revendication 3 **caractérisé en ce que** ladite deuxième phase (2) comprend en outre :
- une étape de transmission audit terminal de communication (TC) d'une requête de délégation de types de transactions, ladite requête comprenant une liste de types de transactions délégables (LTDaUsr), que le serveur intermédiaire (Srvlnt) souhaite mettre en oeuvre ;
- une étape de réception, en provenance dudit terminal de communication (TC), d'une donnée représentative d'une décision de souscription dudit utilisateur (Usr) à au moins un type de transaction de la liste de types de transactions délégables (LTDaUsr), dite liste de types de transactions délégués (LTDeUsr).
- une étape d'enregistrement, au sein de la structure de données de délégation (StructDel), d'une association entre ladite liste de types de transactions délégués (LTDeUsr) et ledit utilisateur (Usr).

5. Procédé de traitement, par un serveur intermédiaire (Srvlnt), d'une transaction provenant d'un terminal de communication (TC) d'un utilisateur, **caractérisé en ce qu'**il comprend :
- une étape de réception (100) d'une requête d'exécution de transaction (ReqExecTr) ;
- une étape d'obtention (101), à partir de ladite requête (ReqExecTr), d'au moins un identifiant dudit utilisateur (id), d'au moins un identifiant d'un serveur de paiement (idSrvP), et d'au moins un type (typeTr) de ladite transaction ;
- une étape de recherche (102), au sein d'une structure de données de provisionnement (StructProv), d'un identifiant dudit utilisateur (idP) auprès du serveur de paiement (SrvP) ;
- une étape de recherche (103), au sein d'une structure de données de délégation (StructDel), d'une donnée de délégation associée audit type (typeTr) de ladite transaction, délivrant une décision de délégation (dd) ;
- lorsque ladite décision de délégation (dd) est positive, une étape de mise en oeuvre (104) par ledit serveur intermédiaire (Srvlnt) de ladite transaction ;
- lorsque ladite décision de délégation (dd) est négative, une étape de transmission (105) audit serveur de paiement (SrvP) dudit type de transaction (typeTr) et dudit identifiant de l'utilisateur (idP) auprès du serveur de paiement (SrvP).

6. Procédé selon la revendication 5 **caractérisé en ce que**, lorsque ladite décision de délégation est positive, ladite étape de mise en oeuvre de ladite transaction par ledit serveur intermédiaire (Srvlnt) comprend :
- une étape d'établissement, avec le serveur de paiement (SrvP), d'une liaison sécurisée de transmission de données ;
- une étape de transmission, au serveur de paiement (SrvP), d'une requête d'obtention d'une donnée bancaire, ladite requête comprenant ledit identifiant (IdP) dudit utilisateur auprès du serveur de paiement (SrvP) ;
- une étape de réception de ladite donnée bancaire associée audit utilisateur ;
- une étape d'exécution de ladite transaction à l'aide de ladite donnée bancaire.

7. Procédé selon la revendication 5 **caractérisé en ce qu'**il comprend en outre, lorsque ladite décision de délégation est négative, une étape de réception, en provenance du serveur de paiement (SrvP), d'un statut de mise en oeuvre de ladite transaction.

8. Procédé selon l'une quelconque des revendications 5 à 7 **caractérisé en ce qu'**il comprend une étape de transmission d'un statut de mise en oeuvre de ladite transaction audit terminal de communication (TC) de l'utilisateur.

9. Serveur intermédiaire (Srvlnt) pour la délégation de la mise en oeuvre de transactions, **caractérisé en ce qu'**il comprend :
- des moyens d'inscription d'au moins un serveur de paiement (SrvP) auprès dudit serveur intermédiaire (Srvlnt), lesdits moyens délivrant, au sein dudit serveur intermédiaire (Srvlnt), une structure de données de délégation (StructDel) comprenant au moins une association entre ledit serveur de paiement (SrvP) et au moins une liste de types de transactions délégués (LTDe) par ledit serveur de paiement (SrvP) audit serveur intermédiaire ;
lesdits moyens comprenant :
- des moyens de transmission (10) audit serveur de paiement (SrvP) d'une requête de délégation de types de transactions, ladite requête comprenant une liste de types de transactions délégables (LTDa), que le serveur intermédiaire (Srvlnt) souhaite mettre en oeuvre pour le compte dudit serveur de paiement (SrvP) ;
- des moyens de réception (11) d'une donnée représentative d'une décision de souscription du serveur de paiement (SrvP) à au moins un type de transaction de la liste de types de transactions délégables (LTDa), dite liste de types de transactions délégués (LTDe) ;
- des moyens d'enregistrement (12), au sein de ladite structure de données de délégation (StructDel), d'une association entre ladite liste de types de transactions délégués (LTDe) et le serveur de paiement (SrvP) ;
et
- des moyens d'inscription d'au moins un utilisateur (Usr) auprès dudit serveur intermédiaire (Srvlnt), lesdits moyens délivrant, au sein dudit serveur intermédiaire (Srvlnt), une structure de données de provisionnement (StructProv) comprenant au moins une association entre un identifiant d'utilisateur (id), un identifiant de serveur de paiement (idSrvP) et un identifiant d'utilisateur (idP) auprès dudit serveur de paiement (SrvP).

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution d'un procédé de délégation selon la revendication 1, lorsqu'il est exécuté sur un ordinateur.
